Europäisches Patentamt

(19) European Patent Office

Office européen des brevets

(11) Publication number: **0 004 992**

A1

## (12) EUROPEAN PATENT APPLICATION

(21) Application number: **79200180.2**

(22) Date of filing: **10.04.79**

(51) Int. Cl.²: **F 16 C 29/02**
**B 23 Q 1/26**

(30) Priority: **14.04.78 NL 7803989**

(43) Date of publication of application:
**31.10.79 Bulletin 79/22**

(84) Designated Contracting States:
**BE CH DE FR GB IT LU NL SE**

(71) Applicant: **N.V. Gereedschapswerktuigenindustrie
Hembrug
Hemkade P.O.Box 412
NL-1500 EK Zaandam(NL)**

(72) Inventor: **Storm, Tonny
No. 15, Vredenoord
Heiloo(NL)**

(74) Representative: **Hoijtink, Reinoud et al,
Sweelinckplein 1
NL-2517 GK The Hague(NL)**

(54) Biassed friction bearing and method of manufacturing and mounting the same.

(57) A biassed friction bearing (55,56,57) for use with a tool holder of a machine tool comprising a plate (60), one side of it has a plurality of ribs (61,61,63,64) and the other side of which is coated with a synthetic resin layer (66), said plate being alternately concave and convex near consecutive ribs (61,62,63,64) on the side (66) coated with synthetic resin and a method of manufacturing said bearing (55,56,57) by reducing the height of even numbered ribs (62,64), coating one side with a synthetic resin layer (66),securing the plate to a flat surface (67) and by flattening the side coated with the synthetic resin layer (66).

FIG.7

EP 0 004 992 A1

-1-

Biassed friction bearing and method of manufacturing and mounting the same.

The invention relates to a biassed friction bearing for use with a carriage or a tool holder of a machine tool and to a method of manufacturing and mounting the same.

In order to achieve high accuracy it is important for the moving parts to be journalled with a minimum of play. For this purpose biassed bearings may be employed, which obviate any gap between the bearing and the body to be supported. Such biassed bearings can be manufactured only with difficulty, so that their accuracy is limited.

The invention has for its object to provide a biassed friction bearing which combines an accurate design with a simple method of manufacture. This is achieved by means of a plate, one side of which is coated with a synthetic resin layer and which has alternating concave and convex shapes near consecutive ribs on the side coated with the synthetic resin layer. At the convex places the friction layer can produce a pressure by the bas stress on the supported body so that any gaps are bridged. A friction bearing according to

-2-

0004992

the invention may have five ribs, the plate being concave near the first rib and convex at the next rib and so forth. In the mounted state the friction bearing may be arranged in a slot and be guarded against a longitudinal displacement by securing it at the medium rib.

According to the invention the friction bearing can be manufactured by the successive staps of reducing the height of even numbered ribs of a plate having ribs of equal height on one side, coating the plate on the side remote from the ribs with a synthetic resin layer, fixing the plate with the ribs to a flat surface so that the free ends of the ribs are substantially in line with one another, and flattening the plae on the side coated with synthetic resin., In this way the desired bias stress can be obtained in the plate so that the plate is locally convex. The synthetic resin layer may be glued to the plate.

For mounting the friction bearing it can be secured at the convex places by connecting the ribs locally by bolts with a support so that the resin-coated side is substantially flat, the bolt being loosened after the insertion of the body to be journalled. Therefore, during the insertion of the body to be journalled the bearing is substantially flat so that the body can be readily inserted without the risk of damage of the bearing. Subsequently, the bolt joint is loosened so that the bearing resumes the locally convex position and will exert the desired pressing force on the supported body.

The invention will be described more fully with reference to the drawing, which shows an embodiment.

In the drawing

Figure 1 is a perspective view of a machine tool in accordance with the invention, some parts being broken away,

Figures 2 to 5 illustrate the various stages of the

0004992

manufacture of the friction bearing in accordance with the invention,

Figure 6 is a sectional view taken on the line VI-VI in Figure 1 and

Figure 7 is a perspective view of the friction bering in the mounted state.

The supporting frame 1 comprises a plurality of longitudinal and transverse beams. On the supporting frame 1 is arranged the bed 2 and at the side of the supporting frame 1 a housing 3 is arranged for accomodating the driving means for the machine. The supporting frame 1 has the shape of a framework and comprises the longitudinal beams 42,43 and 4,5 and the transverse beams 6,7. The vertical posts 8,9,10 and 11 support the rectangular framework 4,7,5. At least two tie beams 12 and 13 are arranged between the longitudinal beams 4 and 5 for supporting the bed. The bed has the shape of a cylinder and is enveloped by a bent-over plate 15, which partly surrounds the cylinder 14 throughout its length. The bent-over plate 15 contributes, in fact, to the rigidity of the bed, though it is not essential thereto. The cylindrical bed 14 is secured in place by means of three supports two of which, 16 and 17, are visible. The bed is provided with the known elements such as the carriage guides 19 and 20, the carriage 21 moving along the same, the carriage driving spindle 22, the tool holder 23, the stationary head 24, the movable head 25 and the main spindle 26. These component parts are all of known type and will, therefore not be further discussed.

The housing 3 comprising the posts 27,28 and the supporting plate 29 holds the main driving motor 30, which drives a gear box 32 by means of a belt transmission 31. The output of the gear box is coupled with the main spindle through a flexible, rotation-resistant coupling 33 so that the axial and radial forces produced by the drive are not transferred to the main spindle so that they will not adversely affect the accuracy of operation of the machine.

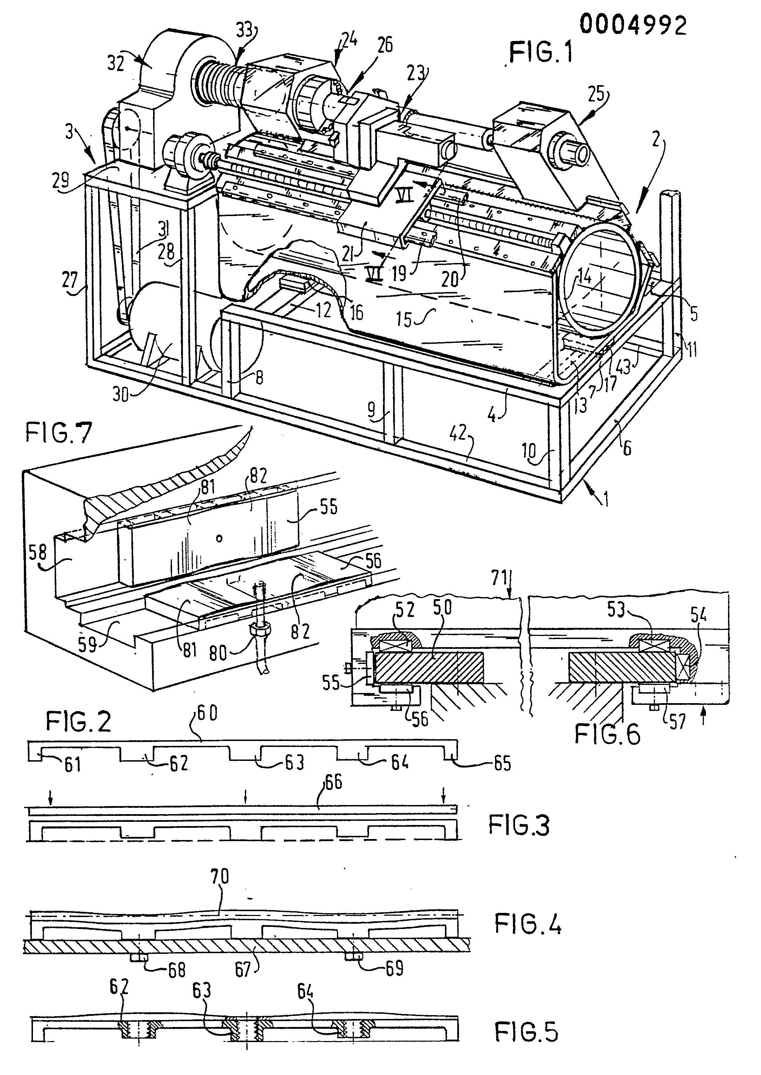

Figure 6 shows the guide means for a carriage in the form of rules 50,51. The rule is journalled with the aid of a roller bearing 52,53,54 and a friction bearing 55,56,57 in accordance with the invention. Figure 7 shows the friction bearing in the mounted state. The bearing 55 or 56 is arranged in a longitudinal slot 58 and 59 respectively. The friction bearing 56, for example, is guarded in the direction of length with the aid of the hollow bolt 80. Through the hole in the bolt lubricating oil can be inserted. Owing to the bias stress the friction bearing is locally convex at the points 81 and 82 and provides a pressing force towards the body to be supported so that the latter is journalled free of play.

Figures 2 to 5 illustrate the various stages of manufacture of the friction bearing embodying the invention. The starting material (see figure 2) is a metal plate 60 having on one side (in the drawing the bottom side) a plurality of ribs 61,62,63,64 and 654. Viewed from one end the even-numbered ones of these ribs are shortened so that longer and shorter ribs alternate. Then a friction layer 66 of a synthetic resin is glued, for example, to the side of the plate 60. By fastening the friction bearing to a supporting plate 67 in the manner shown in Figure 4 by tightening the bolts 68 and 69 extending through tapped holes in the ribs 62 and 64, the corrugated shape shown of the synthetic resin layer 66 is obtained. At the same time stress is thus introduced into the bearing. Subsequently by a suitable flattening operation the synthetic resin layer 66 is smoothed out along the broken line 70. After loosening and removing of the bolts 68 and 69 the shape of Figure 5 is obtined. The bearing is alternately hollow and bulging and has a bias stress.

For mounting purposes the bearing is arranged on the fastening plate with the aid of three bolts, which are screwed into the ribs located between the ends, in this embodiment of Figures 2 to 5, the ribs 62,63 and 64. The bolts in the ribs 62 and 64 are tightened so that the bearing substantially resumes its flat shape so that it is subjected to stress. Subsequently, the body 71 to be supported (journalled)(see figure 6)is put in place. Then the bolts in the ribs 62 and 64 are loosened so that locally the bearing can resume its convex shape whilst exerting a pressing force on the body to be journalled. Consequently the bearing will constantly exert a force derived from the bias stress on the body to be journalled so that clearance in the bearing is obviated.

0004992

-1-

## CLAIMS

1. A biassed friction bearing for use with a carriage or a tool holder of a machine tool characterized by a plate, one side of which has a plurality of ribs and the other side of which is coated with a synthetic resin layer, said plate being alternately concave and convex near consecutive ribs on the side coated with synthetic resin.

2. A biassed friction bearing as claimed in Claim 1 characterized in that the plurality of ribs amounts to five and the plate is concave near the first rib.

0004992

3. A biassed friction bearing as claimed in claims 1 and 2 characterized in that the middle one of the plurality of ribs has a tapped hole for fastening purposes.

4. A method of manufacturing a friction bearing as claimed in Claims 1 to 3 characterized in that in order of succession the height of the even-numbered ribs of a plate having on one side a plurality of ribs of equal height is reduced, viewed from one end, the plate is coated on the side remote the ribs with a synthetic resin layer, the plate with the ribs is secured to a flat surface so that the free ends of the ribs are substantially in line with one another and the plate is flattened on the side coated with synthetic resin layer.

5. A method as claimed in Claim 4 characterized in that the synthetic resin layer is secured to the plate by gluing.

6. A method of mounting the friction bearing claimed in Claims 1 to 3 characterized in that at the bulging places the friction bearing is secured in place by connecting the ribs locally by bolts to a support so that the synthetic resin coated side is substantially flat the bolt joint being loosened after the body to be journalled is arranged in place.

0004992

FIG.1

FIG.7

FIG.2

FIG.3

FIG.4

FIG.5

FIG.6

0004992

## European Patent Office

### EUROPEAN SEARCH REPORT

Application number

EP 79 20 0180

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | GB - A - 1 220 106 (LODIGE)<br>* page 2, lines 103-123; figure 4 * | 1,3 | F 16 C 29/02<br>B 23 Q 1/26 |
| | DE - C - 1 287 380 (V.E.B.)<br>* column 2, lines 33-41 * | 1 | |
| | DE - A - 2 524 460 (SHAMBAM)<br>* page 10, lines 9-17; page 16, lines 12-14 * | 1,3 | |
| | | | **TECHNICAL FIELDS SEARCHED (Int.Cl.²)** |
| | US - A - 3 436 129 (JAMES)<br>* column 2, lines 68-72; column 3, lines 1,2,21-25,35-39; column 4, lines 20-23 * | 1,5 | F 16 C 29/02<br>B 23 Q 1/26 |
| A | DE - A - 1 750 244 (SPIETH) | | |
| A | FR - A - 2 330 912 (RENAULT) | | |
| A | FR - A - 2 320 459 (TRW) | | |
| A | CH - A - 591 641 (HYDREL) | | |
| A | DE - C - 530 344 (BLACK) | | **CATEGORY OF CITED DOCUMENTS** |

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-07-1979 | DE GUSSEM |

EPO Form 1503.1   06.78